(19) Europäisches Patentamt
European Patent Office
Office européen des brevets

(11) EP 4 079 536 B1

(12) **EUROPEAN PATENT SPECIFICATION**

(45) Date of publication and mention of the grant of the patent:
**03.04.2024 Bulletin 2024/14**

(21) Application number: **20904040.1**

(22) Date of filing: **17.12.2020**

(51) International Patent Classification (IPC):
***B60C 1/00*** *(2006.01)* ***C08C 19/25*** *(2006.01)*
***C08L 7/00*** *(2006.01)* ***C08L 15/00*** *(2006.01)*
***C08K 3/04*** *(2006.01)* ***C08K 3/36*** *(2006.01)*

(52) Cooperative Patent Classification (CPC):
(C-Sets available)
**C08C 19/25; B60C 1/00; C08C 19/22; C08C 19/44; C08K 3/36;** C08K 2201/005; C08K 2201/006; Y02T 10/86 (Cont.)

(86) International application number:
**PCT/JP2020/047292**

(87) International publication number:
**WO 2021/125299 (24.06.2021 Gazette 2021/25)**

(54) **RUBBER COMPOSITION AND TIRE**

KAUTSCHUKZUSAMMENSETZUNG UND REIFEN

COMPOSITION DE CAOUTCHOUC ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2019 JP 2019229682**

(43) Date of publication of application:
**26.10.2022 Bulletin 2022/43**

(73) Proprietor: **BRIDGESTONE CORPORATION**
**Chuo-ku**
**Tokyo 104-8340 (JP)**

(72) Inventor: **TSUCHIDA Kazutaka**
**Tokyo 104-8340 (JP)**

(74) Representative: **Marks & Clerk LLP**
**15 Fetter Lane**
**London EC4A 1BW (GB)**

(56) References cited:
**EP-A1- 2 223 959**
**WO-A1-2016/140217**
**WO-A1-2019/117266**
**WO-A1-2019/221184**
**WO-A1-2019/235622**
**JP-A- 2010 111 754**
**JP-A- 2012 107 129**
**JP-A- 2012 136 581**
**JP-A- 2017 513 786**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 079 536 B1

(52) Cooperative Patent Classification (CPC): (Cont.)

C-Sets
**C08F 236/10, C08F 4/48;**
**C08K 3/36, C08L 15/00;**
**C08L 15/00, C08L 91/00, C08L 57/02, C08K 3/04, C08K 3/36, C08K 5/548, C08K 5/09, C08K 5/18, C08K 3/22, C08K 5/47, C08K 5/31, C08K 5/47;**
C08F 236/06, C08F 212/08

## Description

TECHNICAL FIELD

The disclosure relates to a rubber composition and a tire.

BACKGROUND

Generally, a pneumatic tire is required to have high performance that can simultaneously meet a plurality of performance requirements. Above all, a tire member such as a tread is strongly desired to suppress rolling resistance of the tire while being excellent in wear resistance, etc. However, these properties are inconsistent with one another, thus there has been much trial and error to date.

In a rubber composition applied to the tread of the tire, silica is often used as one of reinforcing fillers. However, generally, increasing the content of silica increases a reinforcement property of the tire, which can improve the wear resistance to some extent, but tends to deteriorate a low loss property. If the content of silica is too high, the viscosity of an unvulcanized rubber could increase beyond necessity to deteriorate processability.

Therefore, for the purpose of achieving both reinforcement property and low loss property of the rubber composition, for example, PTL 1 discloses a technique to improve dispersibility of silica by the combined use of silica having a predetermined value or more of a CTAB specific surface area and a predetermined value or more of a BET specific surface area and a mercapto group-containing silane coupling agent.

CITATION LIST

Patent Literature

PTL 1: JP2011140612A

SUMMARY

(Technical Problem)

However, although the technique of PTL 1 can obtain a certain low loss property with the effect of the silane coupling agent, the particle size of silica is large, and further improvement has been required for the reinforcement property.

Therefore, it could be helpful to provide a rubber composition that has achieved both reinforcement property and low loss property at a high level and a tire in which both reinforcement property and low loss property have been achieved at a high level.

(Solution to Problem)

The inventors have studied to solve the aforementioned problems and found that reducing the particle size (primary particle diameter) of silica compared to the conventional one increases dispersibility to improve the reinforcement property of the rubber composition and increasing the form of aggregates (aggregate) of silica obtains excellent low loss property without reducing the reinforcement property. The inventors have also found that containing a specific modified rubber in the rubber component can more increase the dispersibility of silica, which can more improve the reinforcement property and the low loss property.

We provide:

a rubber composition comprising a rubber component and silica, wherein the silica has a CTAB adsorption specific surface area of 250 $m^2/g$ or more; the silica has a diameter in the form of aggregates ($D_{CPS}$) and a primary particle diameter (Di), as measured by disc centrifugal particle size analysis, that satisfy:

$$700 \geq D_{CPS}^3/D_I^3 \geq 300 \qquad (1);$$

and

the rubber component contains at least one selected from modified butadiene rubber and modified styrene butadiene rubber, wherein the at least one selected from modified butadiene rubber and modified styrene butadiene rubber is

modified by at least one selected from the group consisting of:

a hydrocarbyloxysilane compound represented by Formula (IV):

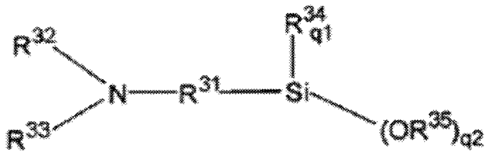

. . . (IV)

[wherein: q1+q2=3 (where q1 is an integer of 0 to 2, and q2 is an integer of 1 to 3); $R^{31}$ represents a divalent aliphatic group or alicyclic hydrocarbon group having 1 to 20 carbon atoms or a divalent aromatic hydrocarbon group having 6 to 18 carbon atoms; $R^{32}$ and $R^{33}$ each independently represent a hydrolyzable group, a monovalent aliphatic group or alicyclic hydrocarbon group having 1 to 20 carbon atoms or a monovalent aromatic hydrocarbon group having 6 to 18 carbon atoms; $R^{34}$, which may be the same or different when the number of q1 is two, represents a monovalent aliphatic group or alicyclic hydrocarbon group having 1 to 20 carbon atoms or a monovalent aromatic hydrocarbon group having 6 to 18 carbon atoms; and $R^{35}$, which may be the same or different when the number of q2 is two or more, represents a monovalent aliphatic group or alicyclic hydrocarbon group having 1 to 20 carbon atoms or a monovalent aromatic hydrocarbon group having 6 to 18 carbon atoms];

a hydrocarbyloxysilane compound represented by Formula (V):

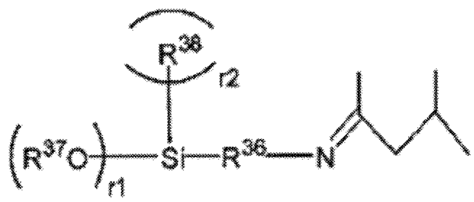

. . . (V)

[wherein: r1+r2=3 (where r1 is an integer of 1 to 3, and r2 is an integer of 0 to 2); $R^{36}$ represents a divalent aliphatic group or alicyclic hydrocarbon group having 1 to 20 carbon atoms or a divalent aromatic hydrocarbon group having 6 to 18 carbon atoms; $R^{37}$, which may be the same or different when the number of r1 is two or more, represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic group or alicyclic hydrocarbon group having 1 to 20 carbon atoms or a monovalent aromatic hydrocarbon group having 6 to 18 carbon atoms; $R^{38}$, which may be the same or different when the number of r2 is two, represents a hydrocarbyloxy group having 1 to 20 carbon atoms, a monovalent aliphatic group or alicyclic hydrocarbon group having 1 to 20 carbon atoms or a monovalent aromatic hydrocarbon group having 6 to 18 carbon atoms]; and

a coupling agent represented by Formula (VI):

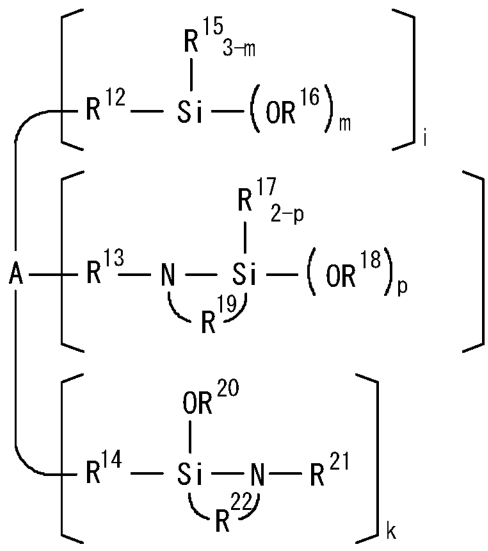

· · · · · (VI)

[wherein: $R^{12}$, $R^{13}$, and $R^{14}$ each independently represent a single bond or an alkylene group having 1 to 20 carbon atoms; $R^{15}$, $R^{16}$, $R^{17}$, $R^{18}$, and $R^{20}$ each independently represent an alkyl group having 1 to 20 carbon atoms; $R^{19}$ and $R^{22}$ each independently represent an alkylene group having 1 to 20 carbon atoms; $R^{21}$ represents an alkyl group or trialkylsilyl group having 1 to 20 carbon atoms; m represents an integer of 1 to 3; p represents 1 or 2; $R^{12}$ to $R^{22}$, m and p are independent from one another when there are a plurality thereof; i, j, and k each independently represent an integer of 0 to 6 with (i+j+k) being an integer of 3 to 10; and A represents a hydrocarbon group and an organic group having 1 to 20 carbon atoms, the organic group having at least one atom selected from the group consisting of an oxygen atom, a nitrogen atom, a silicon atom, a sulfur atom, and a phosphorus atom, without having active hydrogen].

The above configuration can achieve both reinforcement property and low loss property at a high level.

Moreover, for my rubber composition, it is more preferable that the at least one selected from modified butadiene rubber and modified styrene butadiene rubber is modified by at least one selected from the group consisting of: N,N-bis(trimethylsilyl)-3-[diethoxy(methyl)silyl]propylamine; N-(1,3-dimethylbutylidene)-3-triethoxysilyl-1-propaneamine; and tetrakis(3-trimethoxysilylpropyl)-1,3-propanediamine. This is because the reinforcement property and the low loss property can be further improved.

In addition, it is preferable that my rubber composition further comprises a thermoplastic resin, wherein the content of the thermoplastic resin is 5 to 50 parts by mass per 100 parts by mass of the rubber component. This is because the low loss property can be further improved.

Moreover, for my rubber composition, it is preferable that the content of the silica is 40 to 120 parts by mass per 100 parts by mass of the rubber component. This is because the reinforcement property and the low loss property can be further improved.

My tire comprises the rubber composition of the aforementioned disclosure.

The above configuration can achieve both reinforcement property and low loss property at a high level.

(Advantageous Effect)

We can provide a rubber composition that has achieved both reinforcement property and low loss property at a high level. We can also provide a tire in which both reinforcement property and low loss property have been achieved at a high level.

DETAILED DESCRIPTION

The following specifically describes one of the disclosed embodiments.

<Rubber composition>

My rubber composition is a rubber composition comprising a rubber component and silica.

The following describes respective components that constitute the rubber composition.

(Rubber component)

My rubber composition comprises a rubber component.

The configuration of this rubber component is required to contain at least one selected from modified butadiene rubber and modified styrene butadiene rubber.

The rubber component other than the modified butadiene rubber and the modified styrene butadiene rubber can be appropriately selected according to the required performance. For example, from the viewpoint that excellent reinforcement property and low loss property can be obtained, it is preferable that a diene-based rubber is contained.

The rubber component can also consist of 100% of the diene-based rubber, but also can contain rubbers other than the diene-based rubber to the extent that they do not impair the purpose of the disclosure. From the viewpoint that the excellent reinforcement property and low loss property can be obtained, the content of the diene-based rubber in the rubber component is preferably 30 mass% or more, more preferably 40 mass% or more, and further preferably 50 mass% or more.

Here, the diene-based rubber includes a natural rubber (NR), a butadiene rubber (BR), a polyisoprene rubber (IR), a styrene butadiene rubber (SBR), a styrene isoprene butadiene rubber (SIBR), a chloroprene rubber (CR), an acrylonitrile butadiene rubber (NBR), etc.

The non-diene based rubber includes an ethylene propylene diene rubber (EPDM), an ethylene propylene rubber (EPM), a butyl rubber (IIR), etc.

One of these rubbers may be used alone, or two or more of these rubbers may be blend and used. Such rubber may be an unmodified rubber or a modified rubber.

Moreover, among the diene-based rubbers, the rubber component preferably contains 20 mass% or more of the polyisoprene rubber, and more preferably contains 50 mass% or more of the polyisoprene rubber. This is because the reinforcement property of the rubber composition can be more improved.

From the viewpoint to maintain the low loss property at a high level, the content of the polyisoprene rubber in the rubber component is preferably 70 mass% or less, and more preferably 60 mass% or less.

As describe above, my rubber composition contains at least one selected from the group consisting of modified butadiene rubber and modified styrene butadiene rubber (hereinafter, also referred to as a "modified rubber") as the rubber component. Containing such modified rubber can increase the interaction with the silica to improve the dispersibility of this silica, resulting in the improvement of the reinforcement property and the low loss property of the rubber composition.

Here, the position of modified functional groups of the modified rubber is not particularly limited and may be, for example, at end of the main chain, in the main chain, or only in the rage of 1/4 of the total chain length from the end of the main chain. The number of the modified functional groups is also not particularly limited and may be appropriately selected according to the purpose.

A modifier to modify the at least one selected from the group consisting of modified butadiene rubber and modified styrene butadiene rubber is modified by at least one selected from the group consisting of a hydrocarbyloxysilane compound represented by Formula (IV), a hydrocarbyloxysilane compound represented by Formula (V), and a coupling agent represented by Formula (VI).

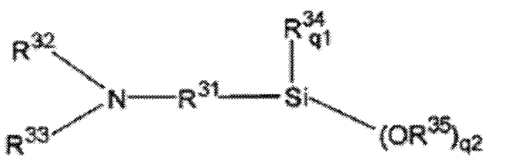 ... (IV)

wherein: q1+q2=3 (where q1 is an integer of 0 to 2, and q2 is an integer of 1 to 3); $R^{31}$ represents a divalent aliphatic group or alicyclic hydrocarbon group having 1 to 20 carbon atoms or a divalent aromatic hydrocarbon group having 6 to 18 carbon atoms; $R^{32}$ and $R^{33}$ each independently represent a hydrolyzable group, a monovalent aliphatic group or alicyclic hydrocarbon group having 1 to 20 carbon atoms or a monovalent aromatic hydrocarbon group having 6 to 18 carbon atoms; $R^{34}$, which may be the same or different when the number of q1 is two, represents a monovalent aliphatic group or alicyclic hydrocarbon group having 1 to 20 carbon atoms or a monovalent aromatic hydrocarbon group having 6 to 18 carbon atoms; and $R^{35}$, which may be the same or different when the number of q2 is two or more, represents a monovalent aliphatic group or alicyclic hydrocarbon group having 1 to 20 carbon atoms or a monovalent aromatic hydrocarbon group having 6 to 18 carbon atoms.

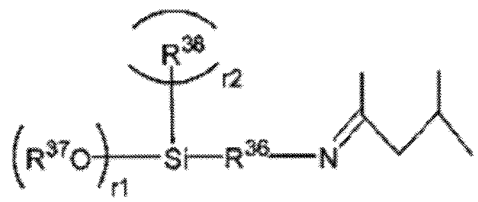

· · · (V)

wherein: r1+r2=3 (where r1 is an integer of 1 to 3, and r2 is an integer of 0 to 2); $R^{36}$ represents a divalent aliphatic group or alicyclic hydrocarbon group having 1 to 20 carbon atoms or a divalent aromatic hydrocarbon group having 6 to 18 carbon atoms; $R^{37}$, which may be the same or different when the number of r1 is two or more, represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic group or alicyclic hydrocarbon group having 1 to 20 carbon atoms or a monovalent aromatic hydrocarbon group having 6 to 18 carbon atoms; $R^{38}$, which may be the same or different when the number of r2 is two, represents a hydrocarbyloxy group having 1 to 20 carbon atoms, a monovalent aliphatic group or alicyclic hydrocarbon group having 1 to 20 carbon atoms or a monovalent aromatic hydrocarbon group having 6 to 18 carbon atoms.

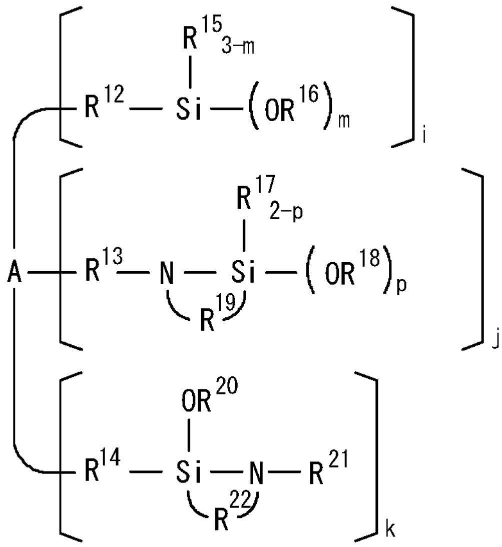

· · · · (VI)

wherein: $R^{12}$, $R^{13}$, and $R^{14}$ each independently represent a single bond or an alkylene group having 1 to 20 carbon atoms; $R^{15}$, $R^{16}$, $R^{17}$, $R^{18}$, and $R^{20}$ each independently represent an alkyl group having 1 to 20 carbon atoms; $R^{19}$ and $R^{22}$ each independently represent an alkylene group having 1 to 20 carbon atoms; $R^{21}$ represents an alkyl group or trialkylsilyl group having 1 to 20 carbon atoms; m represents an integer of 1 to 3; p represents 1 or 2; $R^{12}$ to $R^{22}$, m and p are independent from one another when there are a plurality thereof; i, j, and k each independently represent an integer of 0 to 6 with (i+j+k) being an integer of 3 to 10; and A represents a hydrocarbon group and an organic group having 1 to 20 carbon atoms, the organic group having at least one atom selected from the group consisting of an oxygen atom, a nitrogen atom, a silicon atom, a sulfur atom, and a phosphorus atom, without having active hydrogen.

Here, it is preferable that the coupling agent represented by Formula (VI) is at least one selected from the group consisting of tetrakis[3-(2,2-dimethoxy-1-aza-2-silacyclopentane)propyl]-1,3-propanediamine, tetrakis(3-trimethoxysilylpropyl)-1,3-propanediamine, and tetrakis(3-trimethoxysilylpropyl)-1,3-bisaminomethylcyclohexane. In this case, the reinforcement property can be more improved.

It is preferable that, among the above-described modifiers, the at least one selected from modified butadiene rubber and modified styrene butadiene rubber is modified by at least one selected from the group consisting of N,N-bis(trimethylsilyl)-3-[diethoxy(methyl)silyl]propylamine, N-(1,3-dimethylbutylidene)-3-triethoxysilyl-1-propanamine, and tetrakis(3-trimethoxysilylpropyl)-1,3-propanediamine. This is because more excellent reinforcement property and low loss property can be achieved.

The total content of the at least one selected from modified butadiene rubber and modified styrene butadiene rubber in the rubber component is, from the viewpoint that both reinforcement property and low loss property can be achieved at a higher level, preferably 20 mass% or more, more preferably 25 mass% or more, and particularly preferably

30 mass% or more. From the viewpoint of the processability of the rubber composition, the total content of the at least one selected from modified butadiene rubber and modified styrene butadiene rubber is preferably 50 mass% or less, and more preferably 45 mass% or less.

(Silica)

My rubber composition comprises silica in addition to the above-described rubber component.

The silica has a CTAB adsorption specific surface area (CTAB) of 250 $m^2/g$ or more and has a diameter in the form of aggregates ($D_{CPS}$) and a primary particle diameter (Di), as measured by disc centrifugal particle size analysis, that satisfy:

$$700 \geq D_{CPS}{}^3/D_I{}^3 \geq 300 \qquad (1).$$

The disc centrifugal particle size analyzer used for measuring the diameter in the form of aggregates ($D_{CPS}$) is not particularly limited, and $D_{CPS}$ can be measured using a commercially available analyzer. For example, use of the disc centrifugal particle size distribution analyzer CPS Disc Centrifuge from CPS Instruments is included. The measurement condition is that silica is added to water at a ratio of 3 wt% and sonicated to obtain a silica suspension. For this sample, the particle size distribution can be measured at a rotational velocity of 20000 rpm using the disc centrifugal particle size distribution analyzer. The measurement may have variation, and thus, the correction may be appropriately made when comparing silica.

The primary particle diameter can be calculated as:

$$D_I = 6000/(CTAB \times \rho) \qquad (2)$$

$\rho$: 2.2 $g/cm^3$.

Conventionally, in order to improve the low heat generating property, the wear resistance, and the fatigue cracking resistance, low structuring has been made to decrease the degree of development of an aggregate structure of carbon black, the wear resistance and the fatigue cracking property have been improved by making the carbon black have a fine particle size, and deterioration of heat generation has been suppressed by broadening the distribution of the form of aggregates. However, even when the form of the carbon black is controlled as such, the wear resistance and the fatigue cracking resistance were likely to deteriorate. This is thought to be due to the increase in a large particle component by broadening the distribution of the form of aggregates of the carbon black.

In contrast, a vulcanized rubber excellent in the reinforcement property can be obtained without sacrificing the low heat generating property. This reason is uncertain, but it is inferred to be due to the following reasons.

The heat generation in the vulcanized rubber generally occurs when fillers such as carbon black and silica contained in the vulcanized rubber rub against one another in the rubber. Thus, as described above, in the environment where the large particle component of the carbon black increases, the low heat generating property tends to deteriorate. Therefore, it is thought that by using silica with a fine particle size in which the primary particle diameter satisfies Formula (2), the silica with a fine particle size enters the gap between the carbon blacks to maintain the state of the low heat generating property without affecting the aggregation of the particles, while the rubber strongly interacts with the carbon black and the silica in a fracture area such as wear and crack of the vulcanized rubber, which can improve the reinforcement property.

However, it is thought that, when the particle size of the silica is too small, the reduction in the low heat generating property is caused. Therefore, in the disclosure, the silica satisfies the above condition of Formula (1), thus the particle size (primary particle diameter) of the silica is reduced compared to the conventional one to increase the reinforcement property, while the increase in the form of aggregates (aggregate) of the silica can effectively suppress the deterioration of the low loss property, which can achieve both reinforcement property and low loss property of the rubber composition at a high level.

When $D_{CPS}{}^3/D_I{}^3$ is less than 300, the particle size of the silica is not small enough and the form of aggregates of the silica is not large enough, thus making impossible to achieve both reinforcement property and low loss property at a high level. On the other hand, when $D_{CPS}{}^3/D_I{}^3$ exceeds 700, the particle size of the silica becomes too small, thus reducing the low loss property.

In order to increase the reinforcement property of the tire, it is effective to reduce the particle size (primary particle diameter) of the silica contained in the rubber composition, while as the particle size of the silica reduces, the distance between the aggregates (forms of aggregates) of the silica reduces, which increases the network effect to deteriorate the low loss property. Therefore, in the disclosure, reducing the primary particle diameter (Di) of the silica

compared to the conventional one improves the reinforcement property of the rubber composition, and increasing the diameter in the form of aggregates ($D_{CPS}$) formed from the primary particles of the silica can suppress the deterioration of the low loss property due to the reduction in the distance between the aggregates, resulting in achievement of the excellent low loss property without reducing the reinforcement property.

Here, the kind of the silica is not particularly limited. For example, it includes a wet silica, a colloidal silica, a calcium silicate, an aluminum silicate, etc.

Among the above-described ones, the silica is preferably the wet silica, and among such wet silicas, the silica is more preferably a precipitated silica. This is because such silica has high dispersibility and can more improve the low loss property and the reinforcement property of the rubber composition. The precipitated silica is a silica obtained by proceeding with the reaction of the reaction solution at a relatively high temperature in a pH range from neutral to alkaline in the early stage of manufacture to grow the primary particles of the silica and then controlling the reaction solution to an acidic side to aggregate the primary particles.

The CTAB adsorption specific surface area (specific surface area by cetyltrimethylammonium bromide adsorption) of the silica needs to be 250 $m^2/g$ or more from the viewpoint to achieve high reinforcement property, and it is preferably 251 $m^2/g$ or more, more preferably 252 $m^2/g$ or more, and further preferably 253 $m^2/g$ or more from the similar viewpoint. From the point to more certainly suppress the deterioration of the low loss property, the CTAB adsorption specific surface area of the silica is preferably 290 or less, more preferably 285 or less, further preferably 282 or less, and particularly preferably 270 or less.

The CTAB adsorption specific surface area means a value measured compliant with ASTM D3765-92. However, the CTAB adsorption specific surface area is a specific surface area ($m^2/g$) calculated from the adsorbed amount of CTAB by setting the adsorption cross sectional area per molecule of cetyltrimethylammonium bromide for the silica surface to 0.35 $nm^2$.

The content of the silica is not particularly limited and can be appropriately selected according to the required performance. However, from the viewpoint that the reinforcement property and the low loss property can be achieved at a higher level, the content of the silica is preferably 40 to 120 parts by mass, more preferably 40 to 100 parts by mass, and further preferably 43 to 83 parts by mass per 100 parts by mass of the rubber component.

(Other components)

My rubber composition can comprise other components to the extent that they do not impair the effect of the disclosure, in addition to the above-described rubber component and silica.

Other components can appropriately include additives usually used in the rubber industry, such as, for example, a filler other than the silica, a thermoplastic resin, an age resistor, a crosslinking accelerator, a crosslinking agent, a crosslinking coagent, an antiozonant, and a surfactant.

The filler includes, for example, carbon black and other inorganic fillers. Among them, it is preferable that the carbon black is included as the filler. This is because more excellent reinforcement property can be obtained.

Here, the carbon black is not particularly limited. For example, any hard carbon and soft carbon manufactured by the oil furnace method can be used. Among them, from the viewpoint to achieve more excellent low loss property and reinforcement property, it is preferable to use carbon black with GPF, FEF, SRF, HAF, ISAF, IISAF, or SAF grade.

The content of the carbon black is preferably 1 to 40 parts by mass, more preferably 1 to 35 parts by mass, and particularly preferably 1 to 30 parts by mass per 100 parts by mass of the rubber component. This is because, for example, if the ratio of the silica in the filler is 70 mass% or more (that is, the carbon black is 30 mass% or less), the wet performance can be successfully maintained.

From the viewpoint of the reinforcement property and the wear resistance, the content ratio of the silica can also be 50 mass% or less. Setting the ratio of the silica to 50 mass% or less (that is, the ratio of the carbon black is 50 mass% or more) achieves the balance between the reinforcement property and the wear resistance, and setting the ratio of the carbon black to 80 mass% can further obtain the effect on the reinforcement property (here, the amount of the filler is the total amount of the silica and the carbon black).

The other inorganic fillers include, for example, an inorganic compound represented by

$$nM \cdot xSiOy \cdot zH_2O \qquad (I)$$

[wherein, M is at least one selected from metals selected from the group consisting of aluminum, magnesium, titanium, calcium, and zirconium, oxides or hydroxides of these metals, and their hydrates, and carbonates of these metals; n, x, y, and z are an integer of 1 to 5, an integer of 0 to 10, an integer of 2 to 5, and an integer of 0 to 10, respectively.]

The inorganic compound of Formula (I) can include alumina ($Al_2O_3$) such as $\gamma$-alumina and $\alpha$-alumina; alumina monohydrate ($Al_2O_3 \cdot H_2O$) such as boehmite and diaspore; aluminum hydroxide [$Al(OH)_3$] such as gibbsite and bayerite; aluminum carbonate [$Al_2(CO_3)_3$], magnesium hydroxide [$Mg(OH)_2$], magnesium oxide ($MgO$), magnesium carbonate

($MgCO_3$), talc ($3MgO•4SiO_2•H_2O$), attapulgite ($5MgO•8SiO_2•9H_2O$), titanium white ($TiO_2$), titanium black ($TiO_{2n-1}$), calcium oxide (CaO), calcium hydroxide [$Ca(OH)_2$], magnesium aluminum oxide ($MgO•Al_2O_3$), clay ($Al_2O_3•2SiO_2$), kaolin ($Al_2O_3•2SiO_2•2H_2O$), pyrophyllite ($Al_2O_3•4SiO_2•H_2O$), bentonite ($Al_2O_3•4SiO_2•2H_2O$), magnesium silicate ($Mg_2SiO_4$, $MgSiO_3$, etc.), calcium aluminum silicate ($Al_2O_3•CaO•2SiO_2$, etc.), calcium magnesium silicate ($CaMgSiO_4$), calcium carbonate ($CaCO_3$), zirconium oxide ($ZrO_2$), zirconium hydroxide [$ZrO(OH)_2•nH_2O$], zirconium carbonate [$Zr(CO_3)_2$], hydrogen that corrects the charge such as various kinds of zeolite, crystalline aluminosilicate including alkali metal or alkaline earth metal, etc.

My rubber composition further comprises a thermoplastic resin, and the content of this thermoplastic resin is preferably 5 to 50 parts by mass, more preferably 5 to 30 parts by mass, more preferably 6 to 20 parts by mass, more preferably 7 to 19 parts by mass, and further preferably 11 to 18 parts by mass per 100 parts by mass of the rubber component. Comprising the thermoplastic resin in the above range can more improve the low loss property and can also improve the braking performance when using the rubber composition for the tire.

The kind of the thermoplastic resin is not particularly limited. It includes, for example, a C5-based resin, a C9-based resin, a C5 to C9-based resin, a dicyclopentadiene-based resin, a rosin-based resin, an alkylphenol-based resin, or a terpenephenol-based resin.

Here, the C5-based resin means a C5-based synthetic petroleum resin, which is a solid polymer obtained by polymerizing C5 fraction using Friedel-Crafts catalyst such as $AlCl_3$ and $BF_3$. Specifically, a copolymer mainly composed of isoprene, cyclopentadiene, 1,3-pentadiene, 1-pentene, etc., a copolymer of 2-pentene and dicyclopentadiene, and a polymer mainly composed of 1,3-pentadiene are exemplified.

The C9-based resin means a C9-based synthetic petroleum resin, which is a solid polymer obtained by polymerizing C9 fraction using Friedel-Crafts catalyst such as $AlCl_3$ and $BF_3$. Specifically, a copolymer mainly composed of indene, methylindene, $\alpha$-methylstyrene, vinyl toluene, etc. is exemplified.

Moreover, the C5 to C9-based resin means a C5 to C9-based synthetic petroleum resin, which is a solid polymer obtained by polymerizing C5 to C9 fraction using Friedel-Crafts catalyst such as $AlCl_3$ and $BF_3$. For example, a copolymer mainly composed of styrene, vinyl toluene, $\alpha$-methylstyrene, indene, etc. is included. In the disclosure, as this C5 to C9-based resin, a resin with few components of C9 or higher is preferable from the viewpoint of the compatibility with the rubber component. Here, "few components of C9 or higher" means that the component of C9 or higher in the total amount of resin is less than 50 mass%, and preferably 40 mass% or less.

The dicyclopentadiene-based resin means a petroleum resin using dicyclopentadiene in the C5 fraction as a main raw material. It includes, for example, the product name "MARUKAREZ M" series (M-890A, M-845A, M-990A, etc.) from Maruzen Petrochemical Co., Ltd.

The rosin-based resin includes, as a natural resin rosin, a gum rosin, a tall oil rosin, and a wood rosin, which are included in raw rosin or tall oil, and, as a modified rosin, a rosin derivative, and a modified rosin derivative, for example, a polymerized rosin and its partially hydrogenated rosin; a glycerin ester rosin and its partially hydrogenated rosin and completely hydrogenated rosin; a pentaerythritol ester rosin and its partially hydrogenated rosin and polymerized rosin.

The alkylphenol-based resin means a phenol-based resin having an alkyl group. It includes, for example, an alkylphenol-acetylene resin such as a p-tert-butylphenol-acetylene resin, and an alkylphenol-formaldehyde resin with low degree of polymerization.

Moreover, the terpenephenol-based resin is a resin that can be obtained by reacting terpenes and various kinds of phenols using Friedel-Crafts catalyst or by further condensing it with formalin. Terpenes as raw material are not particularly limited but are preferably monoterpene hydrocarbon such as $\alpha$-pinene and limonene, more preferably the one including $\alpha$-pinene, and particularly preferably $\alpha$-pinene. In the disclosure, a terpenephenol-based resin with a high ratio of phenolic components is preferable. One or two or more of these resins can be used together.

Moreover, it is preferable that the rubber composition comprises a novolac-type phenolic resin as a phenolic resin. Comprising the novolac-type phenolic resin can increase the elastic modulus in the rubber composition to improve the steering stability without using the curing agent and without reducing the wet performance.

As the age resistor, the publicly known one can be used, and the age resistor is not particularly limited. It can include, for example, a phenolic-based age resistor, an imidazole-based age resistor, and an amine-based age resistor. One or two or more of these age resistors can be used together.

As the crosslinking accelerator, the publicly known one can be used, and the crosslinking accelerator is not particularly limited. It includes, for example, a thiazole vulcanization accelerator such as 2-mercaptobenzothiazole and dibenzothiazyl disulfide; a sulfenamide vulcanization accelerator such as N-cyclohexyl-2-benzothiazyl sulfenamide and N-t-butyl-2-benzothiazyl sulfenamide; a guanidine vulcanization accelerator such as diphenylguanidine; a thiuram vulcanization accelerator such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; a dithiocarbamate vulcanization accelerator such as zinc dimethyldithiocarbamate; and zinc dialkyldihio phosphate. One or two or more of these crosslinking accelerators can be used together.

The crosslinking agent is also particularly limited. It includes, for example, sulfur and a bismaleimide compound. One or two or more of these crosslinking agents can be used together.

The kinds of the bismaleimide compound can include, for example, N,N'-o-phenylenebismaleimide, N,N'-m-phenylenebismaleimide, N,N'-p-phenylenebismaleimide, N,N'-(4,4'-diphenylmethane)bismaleimide, 2,2-bis-[4-(4-maleimidephenoxy)phenyl]propane, and bis(3-ethyl-5-methyl-4-maleimidephenyl)methane. In the disclosure, N,N'-m-phenylenebismaleimide and N,N'-(4,4'-diphenylmethane)bismaleimide can be preferably used.

The crosslinking coagent includes, for example, zinc oxide (ZnO) and fatty acid. The fatty acid may be any one of saturated or unsaturated, and straight-chain or branched fatty acids, and the number of carbon atoms of the fatty acid is also not particularly limited, but the fatty acid includes, for example, a fatty acid having 1 to 30 carbon atoms, preferably 15 to 30 carbon atoms, more specifically, naphthenic acid such as cyclohexane acid (cyclohexane carboxylic acid) and alkylcyclopentane having a side chain; saturated fatty acid such as hexanoic acid, octanoic acid, decanoic acid (including branched carboxylic acid such as neodecanoic acid), dodecanoic acid, tetradecanoic acid, hexadecanoic acid, and octadecanoic acid (stearic acid); unsaturated fatty acid such as methacrylic acid, oleic acid, linoleic acid, and linolenic acid; and resin acid such as rosin, tall oil acid, and abietic acid. One of them may be used alone, or two or more of them can be used together. In the disclosure, zinc oxide or stearic acid can be preferably used.

My method for manufacturing the rubber composition is not particularly limited, and the rubber composition can be obtained by compounding and kneading the respective components (the rubber component, the silica, and other components) that constitute the rubber composition.

<Tire>

My tire uses the above-described rubber composition. The tire obtained by using the rubber composition as a tire material can have excellent reinforcement property and low loss property.

In my tire, specifically, the above-described rubber composition is applied to any member, but it is particularly preferable that, among such tire members, the rubber composition is applied to a tread. The tire using the rubber composition for the tread can achieve both reinforcement property (eventually, the wear resistance, the steering stability, etc.) and low loss property at a high level. A gas with which my tire is filled includes normal air or air whose oxygen partial pressure has been changed, or an inert gas such as nitrogen.

EXAMPLES

The following describes the disclosure in more detail with Examples, but the disclosure is not limited in any way to following Examples.

(Fabrication of modified SBR1)

Into a dry, nitrogen-substituted 800-mL pressure-resistant glass container, a cyclohexane solution of 1,3-butadiene and a cyclohexane solution of styrene were added to have 1,3-butadiene of 70.2 g and styrene of 39.5 g, 0.6 mmol of 2,2-di(tetrahydrofuryl)propane was added, 0.8 mmol of n-butyllithium was added, and then, polymerization was performed at 50 °C for 1.5 hours. To the polymerization reaction system in which the polymerization conversion rate became almost 100% at this time, 0.72 mmol of N-(1,3-dimethylbutylidene)-3-triethoxysilyl-1-propanamine was added as a modifier, and then, modification reaction was performed at 50 °C for 30 minutes. After that, 2 mL of isopropanol 5-mass% solution of 2,6-di-t-butyl-p-cresol (BHT) was added to stop the reaction and dry it in accordance with the usual method, thus obtaining a modified SBR1. As a result of measurement of the microstructure of the obtained modified SBR1, the bound styrene content was 35 mass%.

(Fabrication of modified SBR2)

Into a dry, nitrogen-substituted 800-mL pressure-resistant glass container, a cyclohexane solution of 1,3-butadiene and a cyclohexane solution of styrene were added to have 1,3-butadiene of 67.5 g and styrene of 7.5 g, 0.6 mmol of 2,2-di(tetrahydrofuryl)propane was added, 0.8 mmol of n-butyllithium was added, and then, polymerization was performed at 50 °C for 1.5 hours. To the polymerization reaction system in which the polymerization conversion rate became almost 100% at this time, 0.72 mmol of N,N-bis(trimethylsilyl)-3-[diethoxy(methyl)silyl]propylamine was added as a modifier, and then, modification reaction was performed at 50 °C for 30 minutes. After that, 2 mL of isopropanol 5-mass% solution of 2,6-di-t-butyl-p-cresol (BHT) was added to stop the reaction and dry it in accordance with the usual method, thus obtaining a modified SBR2. As a result of measurement of the microstructure of the obtained modified SBR2, the bound styrene content was 10 mass%, the vinyl bond content of the butadiene part was 40%, and the peak molecular weight was 200,000.

(Fabrication of modified SBR3)

A tank pressure container with an inner volume of 10 L, a ratio (L/D) of the internal length (L) to the diameter (D) of 4.0, having an inlet at the bottom and an outlet at the apex and including a stirrer as a stirrer-equipped tank reactor and a jacket for controlling the temperature was used as a polymerization reactor. Preliminarily water-removed 1,3-butadiene was mixed at 17.2 g/min, styrene at 10.5 g/min, and n-hexane at 145.3 g/min. In a static mixer disposed in the middle of the pipe that supplies the inlet of the reactor with this mixed solution, n-butyllithium for residual impurity deactivation process was added and mixed at 0.117 mmol/min, and then, it was continuously supplied to the bottom of the reactor. Furthermore, 2,2-bis(2-oxolanyl)propane as a polar material at a rate of 0.019 g/min and n-butyllithium as a polymerization initiator at a rate of 0.242 mmol/min were supplied to the bottom of the polymerization reactor that vigorously mixes them with a stirrer to continuously continue the polymerization reaction. The temperature was controlled so that the temperature of the polymerization solution at the apex outlet of the reactor was 75 °C. When the polymerization became sufficiently stable, a few polymer solution before the addition of the coupling agent was extracted from the apex outlet of the reactor, the solvent was removed after adding the antioxidant (BHT) to be 0.2 g per 100 g of polymer, and then, Mooney viscosity at 110 °C and various molecular weights were measured.

Next, to the polymer solution that had flowed out from the outlet of the reactor, tetrakis(3-trimethoxysilylpropyl)-1,3-propanediamine diluted to 2.74 mmol/L was continuously added as a coupling agent at a rate of 0.0302 mmol/min (n-hexane solution containing 5.2 ppm water), and then, the polymer solution to which the coupling agent had been added was mixed by passing through the static mixer to undergo the coupling reaction. At this time, the time until the coupling agent was added to the polymerization solution that had flowed out from the outlet of the reactor was 4.8 minutes, the temperature was 68 °C, and the difference between the temperature in the polymerization process and the temperature at which the modifier was added was 7 °C. To the polymer solution that had undergone the coupling reaction, the antioxidant (BHT) was continuously added at 0.055 g/min (n-hexane solution) to be 0.2 g per 100 g of polymer, and then, the coupling reaction was ended. Along with the antioxidant, oil (JOMO process NC140 made by JX Nippon Oil & Energy Corporation) was continuously added to be 10.0 g per 100g of polymer, and then, they were mixed with the static mixer. The solvent was removed by steam stripping to obtain a modified SBR3.

The modified SBR3 has a "branching degree" of 8, which is equivalent to the number of branches assumed from the number of functional groups and the additive amount of the coupling agent (it can be confirmed from the value of the contracting factor), and the "number of SiOR residual groups" of 4, which is equivalent to the number obtained by subtracting the number of SiOR reduced by the reaction from the total number of SiOR that one molecule of coupling agent has.

As a result of the measurement of the microstructure of the obtained modified SBR3, the bound styrene content was 40 mass%, the vinyl bond content (1,2-bond content) was 41 mol%, weight-average molecular weight (Mw) = 85.2 $\times 10^4$, including 10.0 parts by mass of oil per 100 parts by mass of the rubber component, ratio of the molecular weight $200 \times 10^4$ or more and $500 \times 10^4$ or less = 4.6%
contracting factor (g') = 0.59

<Examples 1 to 3 and Comparative Examples 1 to 3>

Samples of the rubber compositions of Examples and Comparative Examples were fabricated by compounding and kneading with the usual method in accordance with the composition presented in Table 1. The numerical values presented in Table 1 are percentages of the mass of respective components.

<Evaluation>

The following evaluations were performed on the respective samples of the rubber compositions in Examples and Comparative Examples.

(1) Reinforcement property (dynamic storage modulus)

The rubber composition of each sample was vulcanized at 145 °C for 33 minutes to obtain a vulcanized rubber. A sheet with a thickness of 2 mm, a width of 5 mm, and a length of 40 mm was cut out from the obtained vulcanized rubber to be a sample. For this sample, using a spectrometer (made by Ueshima Seisakusho Co., Ltd.), the dynamic storage modulus (E') was measured with a temperature of 24 °C, a strain of 5%, and a frequency of 52 Hz.

The obtained dynamic storage modulus (E') was indicated by an index when the value of Example 1 was 100. The larger the index value, the larger the dynamic storage modulus, indicating the excellence in the reinforcement property. The evaluation result was presented in Table 1.

(2) Low loss property

The rubber composition of each sample was vulcanized at 160 °C for 15 minutes to obtain a vulcanized rubber. For the obtained vulcanized rubber, using the spectrometer (made by Ueshima Seisakusho Co., Ltd.), the loss tangent (tan δ) was measured with a temperature of 24 °C and a frequency of 52 Hz, and then, the reciprocal of the difference of tan δ between a strain of 3% and a strain of 0.1% was taken.

The evaluation was indicated by an index when the reciprocal of the difference of tan δ of the sample of Example 1 was 100. The smaller the index value, the more excellent the low loss property. The evaluation result was presented in Table 1

(3) Total evaluation

The above-described evaluation values (index values) for the reinforcement property and the low loss property were summed to calculate the total evaluation.

For the total evaluation, a numerical valued of 180 or more means that both reinforcement property and low loss property are achieved at a high level.

| | | Example 1 | Example 2 | Example 3 | Comparative Example 1 | Comparative Example 2 | Comparative Example 3 |
|---|---|---|---|---|---|---|---|
| Composition contents | Modified SBR1 | 100 | - | - | - | 100 | - |
| | Modified SBR2 | - | 100 | - | - | - | - |
| | Modified SBR3 | - | - | 110 | - | - | - |
| | Styrene butadiene rubber *1 | - | - | - | 137.5 | - | 137.5 |
| | Carbon black *2 | 7 | 7 | 7 | 7 | 7 | 7 |
| | Silica A *3 | 70 | 70 | 70 | 70 | - | - |
| | Silica B *4 | - | - | - | - | 90 | 90 |
| | Silane coupling agent *5 | 8.75 | 8.75 | 8.75 | 8.75 | 7.2 | 7.2 |
| | Stearic acid | 0.5 | 0.5 | 0.5 | 0.5 | 0.5 | 0.5 |
| | Age resistor *6 | 2 | 2 | 2 | 2 | 2 | 2 |
| | C5C9 resin *7 | 6 | 6 | 6 | 6 | 6 | 6 |
| | Process oil *8 | 16.75 | 16.75 | 16.75 | 16.75 | 16.75 | 16.75 |
| | Zinc oxide | 2 | 2 | 2 | 2 | 2 | 2 |
| | Vulcanization accelerator (CBS) *9 | 1 | 1 | 1 | 1 | 1 | 1 |
| | Sulfur | 2.1 | 2.1 | 2.1 | 2.1 | 2.1 | 2.1 |
| | Vulcanization accelerator (DPG) *10 | 2 | 2 | 2 | 2 | 2 | 2 |
| | Vulcanization accelerator (MBTS) *11 | 1 | 1 | 1 | 1 | 1 | 1 |

(continued)

| | | Example 1 | Example 2 | Example 3 | Comparative Example 1 | Comparative Example 2 | Comparative Example 3 |
|---|---|---|---|---|---|---|---|
| Evaluation result | Reinforcement property | 100 | 88 | 93 | 51 | 113 | 54 |
| | Low loss property | 100 | 199 | 96 | 79 | 57 | 56 |
| | Total value | 200 | 287 | 189 | 131 | 170 | 110 |

*1 "Emulsion-polymerized SBR" made by JSR Corporation styrene content: 40 mass%, oil extended rubber of 37.5 parts per 100 parts by mass of styrene butadiene rubber.
2* "SEAST 7HM" made by Tokai Carbon Co., Ltd.
3* "Premium SW MP" made by Solvay, CTAB adsorption specific surface area: 250 $m^2/g$, primary particle diameter ($D_1$): 10.91 nm, diameter in the form of aggregates ($D_{CPS}$) measured by disc centrifugal particle size analysis: 82 nm, 6000/CTAB/ρ = 10.91, $D_{CPS3}/D_{13}$: 424.7
4* "Nipsil AQ" made by Tosoh Silica Corporation, CTAB adsorption specific surface area: 155 $m^2/g$, primary particle diameter (Di): 17.6 nm, diameter in the form of aggregates ($D_{CPS}$) measured by disc centrifugal particle size analysis: 76 nm, 6000/CTAB/ρ = 17.60, $D_{CPS}^3/D_I^3$: 80.4
** For the diameter in the form of aggregates ($D_{CPS}$) and the primary particle diameter (Di) of silica, silica is added to water at a ratio of 3 wt% and sonicated to obtain a silica suspension, and then, for this sample, using a disc centrifugal particle size distribution analyzer CPS Disc Centrifuge from CPS Instruments, the particle size distribution is measured at a rotational velocity of 20000 rpm.
*5 "ABC-856" made by Shin-Etsu Chemical Co., Ltd.
*6 N-phenyl-N'-(1,3-dimethylbutyl)-p-phenylenediamine, "NOCRAC 6C" made by Ouchi Shinko Chemical Industrial Co., Ltd.
*7 "T-REZ RD104" made by Tonen Chemical Corporation
*8 Process oil
*9 N-cyclohexyl-2-benzothiazolylsulfenamide, "NOCCELER®" (NOCCELER is a registered trademark in Japan, other countries, or both) CZ-G" made by Ouchi Shinko Chemical Industrial Co., Ltd.
*10 1,3-diphenylguanidine, "NOCCELER® (NOCCELER is a registered trademark in Japan, other countries, or both) D" made by Ouchi Shinko Chemical Industrial Co., Ltd.
*11 Dibenzothiazolyl disulfide, "NOCCELER® (NOCCELER is a registered trademark in Japan, other countries, or both) DM-P" made by Ouchi Shinko Chemical Industrial Co., Ltd.

From the result of Table 1, it was found that the respective samples of Examples indicated more excellent values for both of the low loss property and the dynamic storage modulus and had higher total values, compared to the respective samples of Comparative Examples.

INDUSTRIAL APPLICABILITY

We can provide a rubber composition that has achieved both reinforcement property and low loss property at a high level. We can also provide a tire in which both reinforcement property and low loss property have been achieved at a high level.

## Claims

**1.** A rubber composition comprising a rubber component and silica, wherein

the silica has a CTAB adsorption specific surface area of 250 $m^2/g$ or more;
the silica has a diameter in the form of aggregates ($D_{CPS}$) and a primary particle diameter (Di), as measured by disc centrifugal particle size analysis, that satisfy:

$$700 \geq D_{CPS}^3/D_I^3 \geq 300 \quad (1);$$

and
the rubber component contains at least one selected from modified butadiene rubber and modified styrene butadiene rubber, wherein the at least one selected from modified butadiene rubber and modified styrene butadiene rubber is modified by at least one selected from the group consisting of:

a hydrocarbyloxysilane compound represented by Formula (IV):

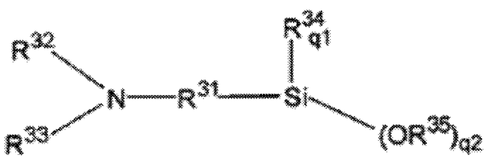

· · · (IV)

[wherein: q1+q2=3 (where q1 is an integer of 0 to 2, and q2 is an integer of 1 to 3); $R^{31}$ represents a divalent aliphatic group or alicyclic hydrocarbon group having 1 to 20 carbon atoms or a divalent aromatic hydrocarbon group having 6 to 18 carbon atoms; $R^{32}$ and $R^{33}$ each independently represent a hydrolyzable group, a monovalent aliphatic group or alicyclic hydrocarbon group having 1 to 20 carbon atoms or a monovalent aromatic hydrocarbon group having 6 to 18 carbon atoms; $R^{34}$, which may be the same or different when the number of q1 is two, represents a monovalent aliphatic group or alicyclic hydrocarbon group having 1 to 20 carbon atoms or a monovalent aromatic hydrocarbon group having 6 to 18 carbon atoms; and $R^{35}$, which may be the same or different when the number of q2 is two or more, represents a monovalent aliphatic group or alicyclic hydrocarbon group having 1 to 20 carbon atoms or a monovalent aromatic hydrocarbon group having 6 to 18 carbon atoms];
a hydrocarbyloxysilane compound represented by Formula (V):

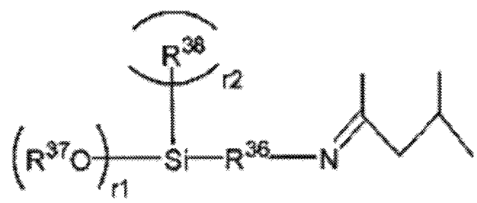

· · · (V)

[wherein: r1+r2=3 (where r1 is an integer of 1 to 3, and r2 is an integer of 0 to 2); $R^{36}$ represents a divalent aliphatic group or alicyclic hydrocarbon group having 1 to 20 carbon atoms or a divalent aromatic hydrocarbon group having 6 to 18 carbon atoms; $R^{37}$, which may be the same or different when the number of

r1 is two or more, represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic group or alicyclic hydrocarbon group having 1 to 20 carbon atoms or a monovalent aromatic hydrocarbon group having 6 to 18 carbon atoms; $R^{38}$, which may be the same or different when the number of r2 is two, represents a hydrocarbyloxy group having 1 to 20 carbon atoms, a monovalent aliphatic group or alicyclic hydrocarbon group having 1 to 20 carbon atoms or a monovalent aromatic hydrocarbon group having 6 to 18 carbon atoms]; and
a coupling agent represented by Formula (VI):

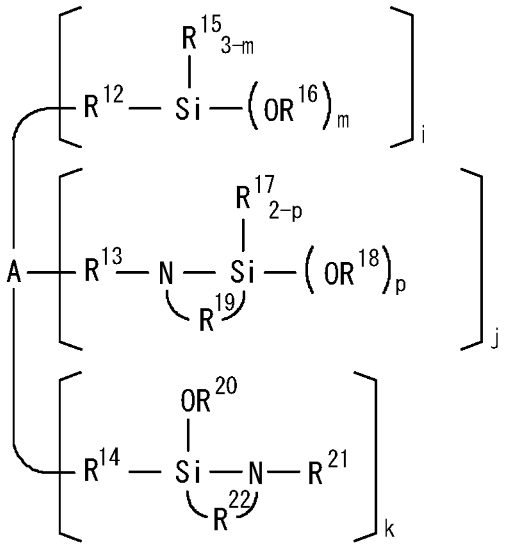

· · · · (VI)

[wherein: $R^{12}$, $R^{13}$, and $R^{14}$ each independently represent a single bond or an alkylene group having 1 to 20 carbon atoms; $R^{15}$, $R^{16}$, $R^{17}$, $R^{18}$, and $R^{20}$ each independently represent an alkyl group having 1 to 20 carbon atoms; $R^{19}$ and $R^{22}$ each independently represent an alkylene group having 1 to 20 carbon atoms; $R^{21}$ represents an alkyl group or trialkylsilyl group having 1 to 20 carbon atoms; m represents an integer of 1 to 3; p represents 1 or 2; $R^{12}$ to $R^{22}$, m and p are independent from one another when there are a plurality thereof; i, j, and k each independently represent an integer of 0 to 6 with (i+j+k) being an integer of 3 to 10; and A represents a hydrocarbon group and an organic group having 1 to 20 carbon atoms, the organic group having at least one atom selected from the group consisting of an oxygen atom, a nitrogen atom, a silicon atom, a sulfur atom, and a phosphorus atom, without having active hydrogen].

**2.** The rubber composition according to claim 1, wherein the at least one selected from modified butadiene rubber and modified styrene butadiene rubber is modified by at least one selected from the group consisting of: N,N-bis(trimethylsilyl)-3-[diethoxy(methyl)silyl]propylamine; N-(1,3-dimethylbutylidene)-3-triethoxy silyl-1-propaneamine; and tetrakis(3-trimethoxysilylpropyl)-1,3-propanediamine.

**3.** The rubber composition according to claim 1 or 2, further comprising a thermoplastic resin, wherein the content of the thermoplastic resin is 5 to 50 parts by mass per 100 parts by mass of the rubber component.

**4.** The rubber composition according to any one of claims 1 to 3, wherein the content of the silica is 40 to 120 parts by mass per 100 parts by mass of the rubber component.

**5.** A tire comprising the rubber composition according to any one of claims 1 to 4.

**Patentansprüche**

**1.** Kautschukzusammensetzung, umfassend eine Kautschukkomponente und Siliciumdioxid, wobei

das Siliciumdioxid eine spezifische CTAB-Adsorptionsfläche von 250 $m^2/g$ oder mehr aufweist;

das Siliciumdioxid einen Durchmesser in Form von Aggregaten ($D_{CPS}$) und einen Primärpartikeldurchmesser ($D_I$) aufweist, wie durch eine Scheibenzentrifugalanalyse der Partikelgröße gemessen, die Folgendes erfüllen:

$$700 \geq D_{CPS}^3/D_I^3 \geq 300 \qquad (1);$$

und

die Kautschukkomponente mindestens einen ausgewählten aus einem modifizierten Butadien-Kautschuk und einem modifizierten Styrol-Butadien-Kautschuk enthält, wobei der mindestens eine ausgewählte aus dem modifizierten Butadien-Kautschuk und dem modifizierten Styrol-Butadien-Kautschuk durch mindestens ein ausgewähltes aus der Gruppe modifiziert wird, die aus Folgendem besteht:

einer Hydrocarbyloxysilan-Verbindung, die durch die Formel (IV) dargestellt wird:

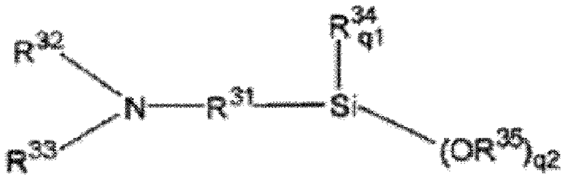

· · · (IV)

[wobei: q1+q2=3 (worin q1 eine ganze Zahl von 0 bis 2 ist, und q2 eine ganze Zahl von 1 bis 3 ist); $R^{31}$ für eine zweiwertige aliphatische Gruppe oder alicyclische Kohlenwasserstoffgruppe mit 1 bis 20 Kohlenstoffatomen oder eine zweiwertige aromatische Kohlenwasserstoffgruppe mit 6 bis 18 Kohlenstoffatomen steht; $R^{32}$ und $R^{33}$ jeweils unabhängig voneinander für eine hydrolysierbare Gruppe, eine einwertige aliphatische Gruppe oder alicyclische Kohlenwasserstoffgruppe mit 1 bis 20 Kohlenstoffatomen oder eine einwertige aromatische Kohlenwasserstoffgruppe mit 6 bis 18 Kohlenstoffatomen stehen; $R^{34}$, das gleich oder unterschiedlich sein kann, wenn die Anzahl von q1 zwei beträgt, für eine einwertige aliphatische Gruppe oder alicyclische Kohlenwasserstoffgruppe mit 1 bis 20 Kohlenstoffatomen oder eine einwertige aromatische Kohlenwasserstoffgruppe mit 6 bis 18 Kohlenstoffatomen steht; und $R^{35}$, das gleich oder unterschiedlich sein kann, wenn die Anzahl von q2 zwei oder mehr beträgt, für eine einwertige aliphatische Gruppe oder alicyclische Kohlenwasserstoffgruppe mit 1 bis 20 Kohlenstoffatomen oder eine einwertige aromatische Kohlenwasserstoffgruppe mit 6 bis 18 Kohlenstoffatomen steht];

einer Hydrocarbyloxysilan-Verbindung, die durch die Formel (V) dargestellt wird:

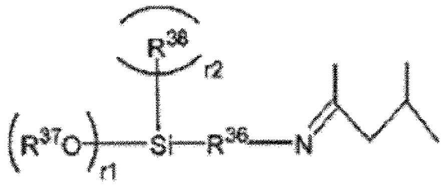

· · · (V)

[wobei: r1+r2=3 (worin r1 eine ganze Zahl von 1 bis 3 ist, und r2 eine ganze Zahl von 0 bis 2 ist); $R^{36}$ für eine zweiwertige aliphatische Gruppe oder alicyclische Kohlenwasserstoffgruppe mit 1 bis 20 Kohlenstoffatomen oder eine zweiwertige aromatische Kohlenwasserstoffgruppe mit 6 bis 18 Kohlenstoffatomen steht; $R^{37}$, das gleich oder unterschiedlich sein kann, wenn die Anzahl von r1 zwei oder mehr beträgt, für eine Dimethylaminomethylgruppe, eine Dimethylaminoethylgruppe, eine Diethylaminomethylgruppe, eine Diethylaminoethylgruppe, eine Methylsilyl(methyl)aminomethylgruppe, eine Methylsilyl(methyl)aminoethylgruppe, eine Methylsilyl(ethyl)aminomethylgruppe, eine Methylsilyl(ethyl)aminoethylgruppe, eine Dimethylsilylaminomethylgruppe, eine Dimethylsilylaminoethylgruppe, eine einwertige aliphatische Gruppe oder alicyclische Kohlenwasserstoffgruppe mit 1 bis 20 Kohlenstoffatomen oder eine einwertige aromatische Kohlenwasserstoffgruppe mit 6 bis 18 Kohlenstoffatomen steht; $R^{38}$, das gleich oder unterschiedlich sein kann, wenn die Anzahl von r2 zwei beträgt, für eine Hydrocarbyloxygruppe mit 1 bis 20 Kohlenstoffatomen, eine einwertige aliphatische Gruppe oder alicyclische Kohlenwasserstoffgruppe mit 1 bis 20 Kohlenstoffatomen oder eine einwertige aromatische Kohlenwasserstoffgruppe mit 6 bis 18 Kohlenstoffatomen steht]; und

einem Kopplungsmittel, das durch die Formel (VI) dargestellt wird:

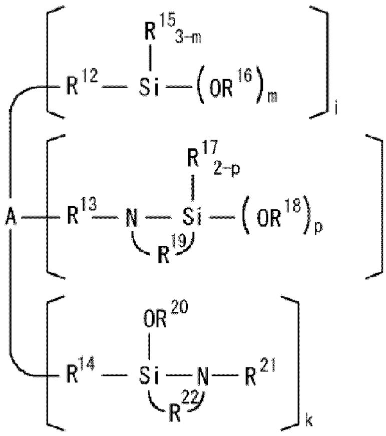

· · · · (VI)

[wobei: $R^{12}$, $R^{13}$ und $R^{14}$ jeweils unabhängig voneinander für eine Einfachbindung oder eine Alkylengruppe mit 1 bis 20 Kohlenstoffatomen stehen; $R^{15}$, $R^{16}$, $R^{17}$, $R^{18}$ und $R^{20}$ jeweils unabhängig voneinander für eine Alkylgruppe mit 1 bis 20 Kohlenstoffatomen stehen; $R^{19}$ und $R^{22}$ jeweils unabhängig voneinander für eine Alkylengruppe mit 1 bis 20 Kohlenstoffatomen stehen; $R^{21}$ für eine Alkylgruppe oder Trialkylsilylgruppe mit 1 bis 20 Kohlenstoffatomen steht; m für eine ganze Zahl von 1 bis 3 steht; p für 1 oder 2 steht; $R^{12}$ bis $R^{22}$, m und p unabhängig voneinander sind, wenn es eine Vielzahl davon gibt; i, j und k jeweils unabhängig voneinander für eine ganze Zahl von 0 bis 6 stehen, wobei (i+j+k) eine ganze Zahl von 3 bis 10 ist; und A für eine Kohlenwasserstoffgruppe und eine organische Gruppe mit 1 bis 20 Kohlenstoffatomen steht, wobei die organische Gruppe mindestens ein Atom aufweist, das aus der Gruppe ausgewählt ist, die aus einem Sauerstoffatom, einem Stickstoffatom, einem Siliciumatom, einem Schwefelatom und einem Phosphoratom besteht, ohne aktiven Wasserstoff aufzuweisen].

2. Kautschukzusammensetzung nach Anspruch 1, wobei der mindestens eine ausgewählte aus einem modifizierten Butadien-Kautschuk und einem modifizierten Styrol-Butadien-Kautschuk durch mindestens ein ausgewähltes aus der Gruppe modifiziert wird, die aus Folgendem besteht: N,N-Bis(trimethylsilyl)-3-[diethoxy(methyl)silyl]propylamin; N-(1,3-Dimethylbutyliden)-3-triethoxysilyl-1-propanamin; und Tetrakis(3-trimethoxysilylpropyl)-1,3-propandiamin.

3. Kautschukzusammensetzung nach Anspruch 1 oder 2, ferner umfassend ein thermoplastisches Harz, wobei der Gehalt des thermoplastischen Harzes 5 bis 50 Massenteile pro 100 Massenteile der Kautschukkomponente beträgt.

4. Kautschukzusammensetzung nach einem der Ansprüche 1 bis 3, wobei der Gehalt des Siliciumdioxids 40 bis 120 Massenteile pro 100 Massenteile der Kautschukkomponente beträgt.

5. Reifen, der die Kautschukzusammensetzung nach einem der Ansprüche 1 bis 4 umfasst.

## Revendications

1. Composition de caoutchouc comprenant un composant en caoutchouc et de la silice, dans laquelle

la silice a une surface spécifique d'adsorption de CTAB de 250 $m^2/g$ ou plus ;
la silice a un diamètre sous forme d'agrégats ($D_{CPS}$) et un diamètre de particule primaire ($D_I$), comme mesuré par l'analyse granulométrique centrifuge à disque, qui satisfont :

$$700 \geq D_{CPS}^3/D_I^3 \geq 300 \qquad (1) ;$$

et
le composant en caoutchouc contient au moins un caoutchouc sélectionné parmi un caoutchouc butadiène modifié et un caoutchouc butadiène styrène modifié, dans lequel l'au moins un caoutchouc sélectionné parmi un caoutchouc butadiène modifié et un caoutchouc butadiène styrène modifié est modifié par au moins un élément sélectionné dans le groupe constitué de :

un composé d'hydrocarbyloxysilane représenté par la formule (IV) :

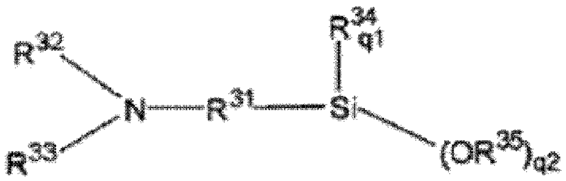

. . . (IV)

[où : q1+q2=3 (où q1 est un nombre entier de 0 à 2, et q2 est un nombre entier de 1 à 3) ; $R^{31}$ représente un groupe aliphatique divalent ou un groupe hydrocarbure alicyclique ayant de 1 à 20 atomes de carbone ou un groupe hydrocarbure aromatique divalent ayant de 6 à 18 atomes de carbone ; $R^{32}$ et $R^{33}$ représentent chacun indépendamment un groupe hydrolysable, un groupe aliphatique monovalent ou un groupe hydrocarbure alicyclique ayant de 1 à 20 atomes de carbone ou un groupe hydrocarbure aromatique monovalent ayant de 6 à 18 atomes de carbone ; $R^{34}$, qui peut être identique ou différent lorsque le nombre de q1 est égal à deux, représente un groupe aliphatique monovalent ou un groupe hydrocarbure alicyclique ayant de 1 à 20 atomes de carbone ou un groupe hydrocarbure aromatique monovalent ayant de 6 à 18 atomes de carbone ; et $R^{35}$, qui peut être identique ou différent lorsque le nombre de q2 est égal à deux ou plus, représente un groupe aliphatique monovalent ou un groupe hydrocarbure alicyclique ayant de 1 à 20 atomes de carbone ou un groupe hydrocarbure aromatique monovalent ayant de 6 à 18 atomes de carbone] ;
un composé d'hydrocarbyloxysilane représenté par la formule (V) :

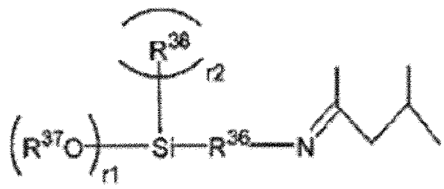

. . . (V)

[où : r1+r2=3 (où r1 est un nombre entier de 1 à 3, et r2 est un nombre entier de 0 à 2) ; $R^{36}$ représente un groupe aliphatique divalent ou un groupe hydrocarbure alicyclique ayant de 1 à 20 atomes de carbone ou un groupe hydrocarbure aromatique divalent ayant de 6 à 18 atomes de carbone ; $R^{37}$, qui peut être identique ou différent lorsque le nombre de r1 est égal ou supérieur à deux, représente un groupe diméthylaminométhyle, un groupe diméthylaminoéthyle, un groupe diéthylaminométhyle, un groupe diéthylaminoéthyle, un groupe méthylsilyl(méthyl)aminométhyle, un groupe méthylsilyl(méthyl)aminoéthyle, un groupe méthylsilyl(éthyl)aminométhyle, un groupe méthylsilyl(éthyl)aminoéthyle, un groupe diméthylsilylaminométhyle, un groupe diméthylsilylaminoéthyle, un groupe aliphatique monovalent ou un groupe hydrocarbure alicyclique ayant de 1 à 20 atomes de carbone ou un groupe hydrocarbure aromatique monovalent ayant de 6 à 18 atomes de carbone ; $R^{38}$, qui peut être identique ou différent lorsque le nombre de r2 est égal à deux, représente un groupe hydrocarbyl(oxy) ayant de 1 à 20 atomes de carbone, un groupe aliphatique monovalent ou un groupe hydrocarbure alicyclique ayant de 1 à 20 atomes de carbone ou un groupe hydrocarbure aromatique monovalent ayant de 6 à 18 atomes de carbone] ; et
un agent de couplage représenté par la formule (VI) :

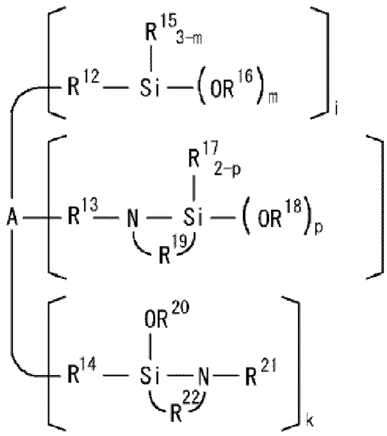

$\cdots\cdots$ (VI)

[où : $R^{12}$, $R^{13}$, et $R^{14}$ représentent chacun indépendamment une seule liaison ou un groupe alkylène ayant de 1 à 20 atomes de carbone ; $R^{15}$, $R^{16}$, $R^{17}$, $R^{18}$ et $R^{20}$ représentent chacun indépendamment un groupe alkyle ayant de 1 à 20 atomes de carbone ; $R^{19}$ et $R^{22}$ représentent chacun indépendamment un groupe alkylène ayant de 1 à 20 atomes de carbone ; $R^{21}$ représente un groupe alkyle ou un groupe trialkyl-silyle ayant de 1 à 20 atomes de carbone ; m représente un nombre entier de 1 et 3 ; p représente 1 ou 2 ; $R^{12}$ à $R^{22}$, m et p sont indépendants l'un de l'autre lorsqu'il y a une pluralité de ceux-ci ; i, j et k représentent chacun indépendamment un nombre entier de 0 à 6 avec (i+j+k) étant un nombre entier de 3 à 10 ; et A représente un groupe hydrocarbure et un groupe organique ayant de 1 à 20 atomes de carbone, le groupe organique ayant au moins un atome choisi dans le groupe constitué d'un atome d'oxygène, d'un atome d'azote, d'un atome de silicium, d'un atome de soufre et d'un atome de phosphore, sans avoir d'hydrogène actif].

**2.** Composition de caoutchouc selon la revendication 1, dans laquelle l'au moins un caoutchouc sélectionné parmi un caoutchouc butadiène modifié et un caoutchouc butadiène styrène modifié est modifié par au moins un élément sélectionné dans le groupe constitué de : N,N-bis(triméthylsilyl)-3-[di éthoxy (méthyl)silyl]propylamine ; N-(1,3-diméthylbutylidène)-3-tri éthoxy silyl-1-propaneamine ; et tétrakis(3-triméthoxysilylpropyl)-1,3-propanediamine.

**3.** Composition de caoutchouc selon la revendication 1 ou 2, comprenant en outre une résine thermoplastique, dans laquelle la teneur en résine thermoplastique est de 5 à 50 parties en masse pour 100 parties en masse du composant en caoutchouc.

**4.** Composition de caoutchouc selon l'une quelconque des revendications 1 à 3, dans laquelle la teneur en silice est de 40 à 120 parties en masse pour 100 parties en masse du composant en caoutchouc.

**5.** Pneu comprenant la composition de caoutchouc selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011140612 A